(19) Europäisches Patentamt / European Patent Office / Office européen des brevets

(11) **EP 4 339 986 B1**

(12) **EUROPEAN PATENT SPECIFICATION**

(45) Date of publication and mention
of the grant of the patent:
**26.02.2025  Bulletin 2025/09**

(21) Application number: **22382845.0**

(22) Date of filing: **13.09.2022**

(51) International Patent Classification (IPC):
*H01H 47/00* (2006.01)      *H02H 7/06* (2006.01)
*H02J 3/00* (2006.01)      *H02J 13/00* (2006.01)

(52) Cooperative Patent Classification (CPC):
**H01H 47/002; H02H 7/06; H02H 7/16;**
H01H 2033/146; H02H 1/0061

(54) **DEVICE AND METHOD FOR MONITORING OVERVOLTAGE PROTECTION CAPACITORS IN GENERATOR CIRCUIT BREAKERS**

EINRICHTUNG UND VERFAHREN ZUR ÜBERWACHUNG VON ÜBERSPANNUNGSSCHUTZKONDENSATOREN IN GENERATORLEISTUNGSSCHALTERN

DISPOSITIF ET PROCÉDÉ DE SURVEILLANCE DES CONDENSATEURS DE PROTECTION CONTRE LES SURTENSIONS DANS LES DISJONCTEURS DE GÉNÉRATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.03.2024  Bulletin 2024/12**

(73) Proprietor: **Iberdrola Generacion Nuclear, S.A. (IBGN)**
**48009 Bilbao (ES)**

(72) Inventors:
• **Archilla Martín-Sanz, Jacobo**
**46625 Cofrentes (ES)**
• **Rouco Rodriguez, Luis**
**28015 Madrid (ES)**

(74) Representative: **Pons**
**Glorieta Rubén Darío 4**
**28010 Madrid (ES)**

(56) References cited:
**WO-A1-2015/191840      CN-A- 114 563 670**
**US-A- 4 321 643**

**Description**

**OBJECT OF THE INVENTION**

The present invention relates to a device and method for monitoring overvoltage protection capacitors in generator circuit breakers, which allows to anticipate possible failures in the overvoltage limiting capacitor, as well as to prevent SCRAM in plants due to the short-circuit failure of one of the overvoltage limiting capacitors.

The document CN 114 563 670 A discloses a device for monitoring overvoltage protection capacitors in generator circuit breakers, according to the preamble of claim 1.

**BACKGROUND OF THE INVENTION**

Generator circuit breakers (GCB), which are connected between an electrical generation plant and a transformer, are known in the state of the art. These circuit breakers allow the passage of electrical current to be stopped in the event of any unforeseen circumstance.

Very high currents circulate through these generator circuit breakers and it is known that, when an inductive circuit is suddenly opened, an overvoltage is produced because the voltage is proportional to that derived from the current:

$$V = L \frac{dI}{dt}$$

Where:

- V: voltage
- L: circuit inductance
- I: current
- t: time

In other words, when trying to suddenly interrupt the current in the generator circuit breaker, the derivative of the current with respect to time increases a lot and, therefore, an overvoltage is produced at the terminals thereof.

The greater the currents to be interrupted, the more evident this phenomenon becomes. That is why, in generator circuit breakers, where currents are very high, the voltage transients are also very high, giving rise to so-called transient recovery voltages (TRV).

In order to limit these transient recovery voltages, both in their peak magnitude and their frequency, it is known from the state of the art that overvoltage limiting capacitors are commonly installed in order to limit both the peak voltage value and the frequency of this recovery voltage.

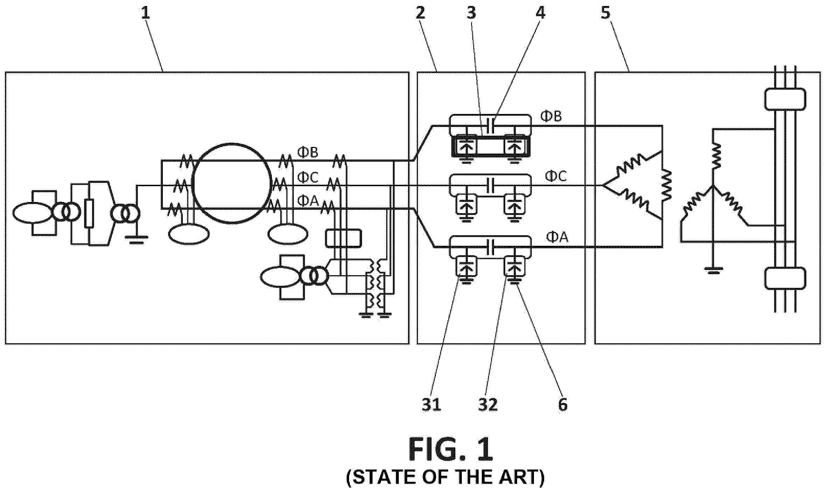

Specifically, as shown in Figure 1, the generator circuit breaker (2) is connected between a generation plant (1), such as a nuclear reactor, and a transformer (5).

The generator circuit breaker (2) comprises one phase circuit breaker (4) for each phase. Capacitors (3) are arranged before and after each circuit breaker (4), which capacitors are in turn connected to earth (6).

However, this configuration has the following drawbacks:

- In the event of short-circuiting, the capacitors trip the generator circuit breaker, automatically causing SCRAM of the reactor.
- In the event that one of the three capacitors on the side between the generator circuit breaker and the main transformer short circuits after the generator circuit breaker is opened and the SCRAM of the reactor, the power supply from the 400 kV grid is lost.
- The open failure of the capacitor causes the inactivity of the affected pole. It should be noted that this inactivity remains undetected until the next shutdown and capacitor status analysis is performed. In the case, for example, of some nuclear power plants, these shutdowns occur every two years.
- It is not possible to monitor the capacitors online to know their status at all times.

**DESCRIPTION OF THE INVENTION**

The object of the invention is a device and method for monitoring overvoltage protection capacitors in generator circuit breaker (GCB), which presents an alternative framework to the one already known in the state of the art and disclosed above.

Specifically, in the present invention, the capacitors are connected to each other instead of to earth, in a double star configuration, so that they can continue to perform the overvoltage suppression function, but at the same time they can be monitored to detect possible failures.

In particular, the device of the invention is intended to be connected to a generator circuit breaker that is connected between an electrical generation plant and a transformer. Normally, generator circuit breakers are three-phase, and comprise one phase circuit breaker for each phase.

The device of the invention comprises two capacitors with the same capacity for each phase, arranged one before and one after each phase circuit breaker, a first terminal of a first capacitor being intended to be connected between the generation plant and the generator circuit breaker, and a first terminal of a second capacitor intended to be connected between the generator circuit breaker and the transformer. A second terminal of each capacitor is connected to a monitoring module, in a double star configuration. The monitoring module is preferably a current transformer.

Normally, if there is no failure, current should not circulate through the closure of the stars of the capacitors. In the event that current circulates between the two stars (measured in the monitoring module), it means that one of the capacitors has deteriorated or failed. This current then circulates through the monitoring module, which detects it and activates a failure signal when it receives this current from the capacitors.

This configuration enables:

- If all the capacitors have the same capacity, the current circulating through the monitoring module must be zero. If the capacity of any of the capacitors is changed, current passage through the monitoring module is established.

- In the event that one of the capacitors is short-circuited, the plant SCRAM does not occur and, at the same time, a current appears through the monitoring module, thus generating an alert to proceed to repair the failure.

- In the event that one of the capacitors loses sufficient capacity or remains open, a current appears through the unbalance protection, thus generating an alert to proceed to repair the failure.

In this way, there are two significant improvements with regards to the configuration with the capacitors connected to earth:

- There is no plant SCRAM due to the failure of one of the capacitors.

- Capacitors can be monitored, allowing actions to be taken in an orderly and safe manner.

**DESCRIPTION OF THE DRAWINGS**

To complement the description that is being made and for the purpose of helping to better understand the features of the invention according to a preferred practical exemplary embodiment thereof, a set of drawings is attached as an integral part of said description in which the following is depicted in an illustrative and non-limiting manner:

Figure 1 shows a schematic representation of a generator circuit breaker of the state of the art.

Figure 2 shows a schematic representation of the generator circuit breaker of the present invention.

**PREFERRED EMBODIMENT OF THE INVENTION**

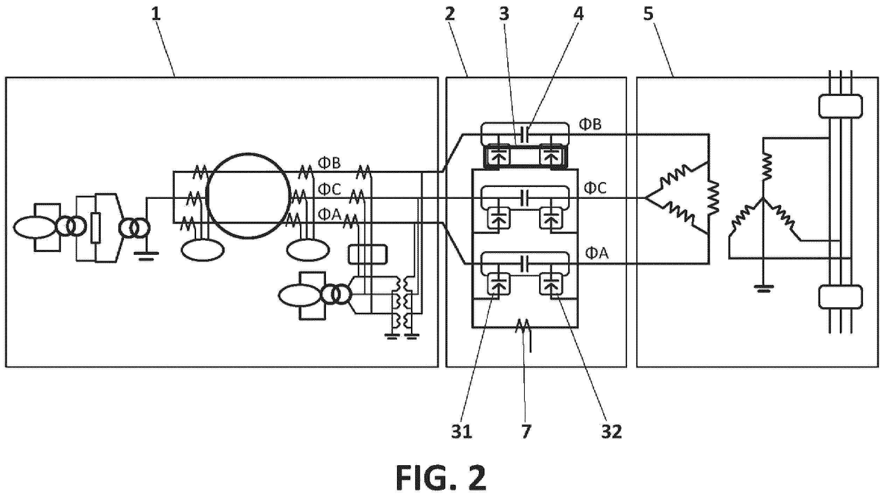

With the help of Figures 1 and 2, a preferred embodiment of the device and method for monitoring switching protection capacitors in generator circuit breakers, object of the present invention, is described below.

As shown in Figure 2, the device of the invention is intended to be connected to a generator circuit breaker (2) that is connected between an electrical generation plant (1) and a transformer (5). Normally, the generator circuit breakers (2) are three-phase, and comprise one phase circuit breaker (4) for each phase.

The device of the invention comprises two capacitors (3) with the same capacity for each phase, arranged one before and one after each phase circuit breaker (2), a first terminal of a first capacitor (31) being intended to be connected between the generation plant (1) and the generator circuit breaker (2), and a first terminal of a second capacitor (32) intended to be connected between the generator circuit breaker (2) and the transformer (5).

A second terminal of each capacitor (31, 32) is connected to a monitoring module (7), in a double star configuration, as reflected in figure 2. The monitoring module (7) is preferably a current transformer.

In the event that the generator circuit breaker (2) is single-phase, the device comprises two capacitors (3) in total. In the event that the generator circuit breaker (2) is three-phase, as is common, the device comprises six capacitors (3) in total.

Furthermore, as previously indicated in the generator circuit breakers (2) of the state of the art, such as the one shown in figure 1, it is connected between a generation plant (1) and a transformer (5). In this case, the generator circuit breaker (2) comprises one phase circuit breaker (4) for each phase. Capacitors (3) are arranged before and after each phase circuit breaker (4), which capacitors are in turn connected to earth (6).

The different failures that can occur, as well as their consequences, for the generator circuit breakers (2) of the state of the art, and the generator circuit breaker (2) connected to the device of the present invention are analysed below.

Firstly, the possible failures in the generator circuit breaker (2) of the state of the art, with the capacitors (3) connected to earth (6), are analysed.

A first possible failure is the short-circuit failure of a capacitor (3). In this case, an earth (6) failure occurs in one of the phases. This fault is detected by an earth (6) failure protection arranged in the generation plant (1), causing the generator circuit breaker (2) to trip immediately. This failure, except for the deterioration of the capacitor (3), does not cause further damage, unless there is a different sequence of subsequent events.

However, if the capacitor (3) that fails is the second capacitor (32) arranged between the generator circuit breaker (4) and the transformer (5), the development of the failure is different, as analysed below. In this case, the start of the failure is exactly the same, causing the plant SCRAM and the opening of the generator circuit breaker (4). After the failure is cleared by the generator circuit breaker (4), the failure remains between the generator circuit breaker (4) and the transformer (5). Once the generator circuit breaker (4) opens, earth (6) failure protections are activated and the 400 kV grid is lost until the failed capacitor (32) can be removed.

A second possible failure is the open capacitor (3) failure. The consequence of this failure is the impossibility of being able to open the affected pole. In this case, there is no possibility of detecting it.

In the case of the device of the present invention, wherein the capacitors (3) are connected to each other, and not to earth (6), a first failure possibility is that one of the capacitors (3) is short-circuited. In this case, there is no detection by the earth (6) failure system of the generation plant (1) since the entire assembly is isolated from earth (6). What does happen is that there is a change in the currents through each branch of capacitors (3), but it is not capable of activating any plant protection due to the low value of the current and there is no current circulation to earth (6). In no case does a short circuit between phases occur because there is always another capacitor (3) that limits the passage of current.

When the capacitor (3) fails, a current circulates through the monitoring module (7), which allows the status of the capacitors (3) to be monitored. Therefore, it allows actions to be taken in an orderly manner.

In the event that the capacitor (3) fails in an open circuit, the unavailability of the pole described above continues to occur. However, in the same way as when there is short-circuit failure, a current passes through the monitoring module (7). This allows the condenser (3) to be monitored and, therefore, actions to be taken in an orderly manner.

Furthermore, there are no significant differences between the configuration with connection to earth (6) and without it in terms of the voltage transient during the opening of the generator circuit breaker (2).

Additionally, in the present device, since the capacitors (3) are not connected to earth (6), the following advantages are obtained:

- The failure of the capacitors (3) in short circuit does not produce a plant SCRAM.

- The failure of the capacitors (3), both in short circuit and in open circuit, can be monitored, which allow:

  • Anticipating a future failure in the capacitors (3).
  • Preventing failure in the operation of one of the poles due to the open circuit failure of a capacitor (3).
  • Preventing the simultaneous failure of two capacitors (3) with different phases, which would lead to catastrophic failures if it occurs.

In view of the foregoing, the device of the invention with the capacitors (3) not connected to earth (6) presents great advantages in terms of the reliability of the generator circuit breaker (4) and, above all, of the generation plant. (1). This is due to the fact that up to six (one per condenser (3)) points referred to as single point vulnerabilities are removed.

In addition, in the possible fault scenarios, there is no difference in terms of overvoltages at the time the generator circuit breaker (4) is opened, so the risk that the transient recovery voltages (TRV) produce restarts in the generator circuit breaker (4) is equally mitigated in both configurations.

In addition, the present invention comprises a method for monitoring overvoltage protection capacitors in generator circuit breakers, comprising the steps of:

- connecting a first terminal of a first capacitor (31) between the generation plant (1) and the generator circuit breaker (4) of the phase thereof,
- connecting a first terminal of a second capacitor (32) between the generator circuit breaker (4) of the phase thereof and the transformer (5),
- connecting a second terminal of the first capacitor (31) and a second terminal of the second capacitor (32) to a monitoring module (7), in a double star configuration,
- detecting, in the monitoring module (7), a current circulating through the capacitors (31, 32), and
- generating, in the monitoring module (7), an alarm signal when a current circulates through the capacitors (31, 32).

## Claims

1. A device for monitoring overvoltage protection capacitors in generator circuit breakers,

   the device being intended to be connected to a generator circuit breaker (2), GCB, arranged between an electrical generation plant (1) and a transformer (5), the generator circuit breaker (2) comprising one or more phases with one phase circuit breaker (4) per phase, wherein the device has a first capacitor (31) and a second capacitor (32) for each phase of the generator circuit breaker (2), wherein each capacitor (31, 32) comprises a first terminal and a second terminal,

   the device being **characterised in that** it additionally comprises:
   a passage detection monitoring module (7) configured to generate an alarm signal when a current circulates through the capacitors (31, 32), wherein the second terminal of the first capacitor (31) and the second terminal of the second capacitor (32) are connected to the monitoring module (7), in a double star configuration, and the first terminal of the first capacitor (31) is intended to be connected between the generation plant (1) and the generator circuit breaker (4) of the phase thereof, and the first terminal of the second capacitor (32) is intended to be connected between the generator circuit breaker (4) of the phase thereof and the transformer (5).

**2.** The device of claim 1, wherein the monitoring module (7) is a current transformer.

**3.** The device of claim 1, comprising six capacitors (31, 32), two for each phase of the generator circuit breaker (2).

**4.** A method for monitoring overvoltage protection capacitors in generator circuit breakers, wherein a generator circuit breaker (2), GCB, comprises one or more phases with one phase circuit breaker (4) per phase, the generator circuit breaker (2) being arranged between an electrical generation plant (1) and a transformer (5), the method comprising the steps of:

- connecting a first terminal of a first capacitor (31) between the generation plant (1) and the generator circuit breaker (4) of the phase thereof,
- connecting a first terminal of a second capacitor (32) between the generator circuit breaker (4) of the phase thereof and the transformer (5),
- connecting a second terminal of the first capacitor (31) and a second terminal of the second capacitor (32) to a monitoring module (7), in a double star configuration,
- detecting, in the monitoring module (7), a current circulating through the capacitors (31, 32), and
- generating, in the monitoring module (7), an alarm signal when a current circulates through the capacitors (31, 32).

**Patentansprüche**

**1.** Vorrichtung zur Überwachung von Überspannungsschutzkondensatoren in Generatorleistungsschaltern,

wobei die Vorrichtung dazu bestimmt ist, mit einem Generatorleistungsschalter (2), GCB, verbunden zu werden, der zwischen einer Stromgenerierungsanlage (1) und einem Wandler (5) angeordnet ist, wobei der Generatorleistungsschalter (2) eine oder mehrere Phasen mit einem Phasenleistungsschalter (4) pro Phase umfasst, wobei die Vorrichtung einen ersten Kondensator (31) und einen zweiten Kondensator (32) für jede Phase des Generatorleistungsschalters (2) aufweist, wobei jeder Kondensator (31, 32) einen ersten Anschluss und einen zweiten Anschluss umfasst, wobei die Vorrichtung **dadurch gekennzeichnet ist, dass** sie zusätzlich Folgendes umfasst: ein Überwachungsmodul (7) für das Durchgangserkennen, das dazu konfiguriert ist, ein Alarmsignal zu generieren, wenn ein Strom durch die Kondensatoren (31, 32) fließt, wobei der zweite Anschluss des ersten Kondensators (31) und der zweite Anschluss des zweiten Kondensators (32) mit dem Überwachungsmodul (7) in einer Doppelsternkonfiguration verbunden sind und der erste Anschluss des ersten Kondensators (31) dazu vorgesehen ist, zwischen der Generierungsanlage (1) und dem Generatorleistungsschalter (4) der Phase davon verbunden zu werden, und der erste Anschluss des zweiten Kondensators (32) dazu vorgesehen ist, zwischen dem Generatorleistungsschalter (4) der Phase davon und dem Wandler (5) verbunden zu werden.

**2.** Vorrichtung nach Anspruch 1, wobei das Überwachungsmodul (7) ein Stromwandler ist.

**3.** Vorrichtung nach Anspruch 1, umfassend sechs Kondensatoren (31, 32), zwei für jede Phase des Generatorleistungsschalters (2).

**4.** Verfahren zur Überwachung von Überspannungsschutzkondensatoren in Generatorleistungsschaltern, wobei ein Generatorleistungsschalter (2), GCB, eine oder mehrere Phasen mit einem Phasenleistungsschalter (4) pro Phase umfasst, wobei der Generatorleistungsschalter (2) zwischen einer Stromgenerierungsanlage (1) und einem Wandler (5) angeordnet ist, wobei das Verfahren folgende Schritte umfasst:

- Verbinden eines ersten Anschlusses eines ersten Kondensators (31) zwischen der Generierungsanlage (1) und dem Generatorleistungsschalter (4) der Phase davon,
- Verbinden eines ersten Anschlusses eines zweiten Kondensators (32) zwischen dem Generatorleistungsschalter (4) der Phase davon und dem Wandler (5),
- Verbinden eines zweiten Anschlusses des ersten Kondensators (31) und eines zweiten Anschlusses des zweiten Kondensators (32) mit einem Überwachungsmodul (7) in einer Doppelsternkonfiguration,
- Erkennen eines durch die Kondensatoren (31, 32) fließenden Stroms im Überwachungsmodul (7) und
- Generieren eines Alarmsignals im Überwachungsmodul (7), wenn ein Strom durch die Kondensatoren (31, 32) fließt.

**Revendications**

**1.** Dispositif de surveillance de condensateurs de protection contre les surtensions dans des disjoncteurs de circuit de générateur,

le dispositif étant destiné à être connecté à un disjoncteur de circuit de générateur (2), GCB, agencé entre une installation de production électrique (1) et un transformateur (5), le disjoncteur de circuit de générateur (2) comprenant une ou plusieurs phases avec un disjoncteur de circuit de phase (4) par phase, dans lequel le dispositif a un premier condensateur (31) et un second condensateur (32) pour chaque phase du disjoncteur de circuit de générateur (2), dans lequel chaque condensateur (31, 32) comprend une première borne et une seconde borne, le dispositif étant **caractérisé en ce qu'**il comprend en outre :
un module de surveillance de détection de passage (7) configuré pour générer un signal d'alarme lorsqu'un courant circule à travers les condensateurs (31, 32), dans lequel la seconde borne du premier condensateur (31) et la seconde borne du second condensateur (32) sont connectées au module de surveillance (7), dans une configuration en double étoile, et la première borne du premier condensateur (31) est destinée à être connectée entre l'installation de production (1) et le disjoncteur de circuit de générateur (4) de la phase de celui-ci, et la première borne du second condensateur (32) est destinée à être connectée entre le disjoncteur de circuit de générateur (4) de la phase de celui-ci et le transformateur (5).

2. Dispositif selon la revendication 1, dans lequel le module de surveillance (7) est un transformateur de courant.

3. Dispositif selon la revendication 1, comprenant six condensateurs (31, 32), deux pour chaque phase du disjoncteur de circuit de générateur (2).

4. Procédé de surveillance des condensateurs de protection contre les surtensions dans des disjoncteurs de circuit de générateur, dans lequel un disjoncteur de circuit de générateur (2), GCB, comprend une ou plusieurs phases avec un disjoncteur de circuit de phase (4) par phase, le disjoncteur de circuit de générateur (2) étant agencé entre une installation de production électrique (1) et un transformateur (5), le procédé comprenant les étapes consistant à :

- connecter une première borne d'un premier condensateur (31) entre l'installation de production (1) et le disjoncteur de circuit de générateur (4) de la phase de celui-ci,
- connecter une première borne d'un second condensateur (32) entre le disjoncteur de circuit de générateur (4) de la phase de celui-ci et le transformateur (5),
- connecter une seconde borne du premier condensateur (31) et une seconde borne du second condensateur (32) à un module de surveillance (7), dans une configuration en étoile double,
- détecter, dans le module de surveillance (7), un courant circulant à travers les condensateurs (31, 32), et
- générer, dans le module de surveillance (7), un signal d'alarme lorsqu'un courant circule dans les condensateurs (31, 32).

**FIG. 1**
(STATE OF THE ART)

**FIG. 2**

**EP 4 339 986 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 114563670 A